# EUROPEAN PATENT APPLICATION

(11) **EP 4 800 603 A1**
(43) Date of publication of application: **02.09.2026**
(21) Application number: 24893163.6
(22) Date of filing: 28.10.2024
(51) Int. Cl.: G06N 3/04, G06N 3/084, G06F 18/214

(54) **MODEL TRAINING METHOD AND APPARATUS**

(30) Priority: 21.11.2023 CN 202311563129
(71) Applicant: Huawei Technologies Co., Ltd., Shenzhen, Guangdong 518129 (CN)
(72) Inventor: CHEN, Jiaxuan, Shenzhen, Guangdong 518129 (CN)
(74) Representative: Maiwald GmbH
(86) International application number: PCT/CN2024/127799
(87) International publication number: WO 2025/108005

(57) **Abstract**

This application provides a model training method and an apparatus, relating to the field of artificial intelligence technologies. The method includes: sending, to at least one worker, a first common data set, or the first common data set and a first shared model weight, where the at least one worker includes a first worker; the first shared model weight is used to determine a weight of a local model on the first worker; the first common data set is used to train the local model on the first worker, and/or the first common data set is used to determine a first data set; and the first data set is an output data set obtained by processing the first common data set by the local model on the first worker. The method in embodiments of this application helps improve a model training effect.

## Description

This application claims priority to Chinese Patent Application No. 202311563129.9, filed with the China National Intellectual Property Administration on November 21, 2023 and entitled "MODEL TRAINING METHOD AND APPARATUS", which is incorporated herein by reference in its entirety.

### TECHNICAL FIELD

This application relates to the field of artificial intelligence technologies, and specifically, to a model training method and an apparatus.

### BACKGROUND

With the rapid development of artificial intelligence (artificial intelligence, AI) technologies, AI models are being applied in an increasingly wide range of scenarios. For example, AI models may be incorporated into some communication systems to implement network intelligence.

In communication systems, private data of each device typically involves user privacy. To protect the user privacy and data security, AI models may be trained based on federated learning (federated learning, FL). However, existing federated learning-based model training methods still face some challenges.

### SUMMARY

This application provides a model training method and an apparatus. This helps improve a model training effect.

According to a first aspect, a model training method is provided. The method is applied to a central node and includes: sending, to at least one worker, a first common data set, or the first common data set and a first shared model weight, where the at least one worker includes a first worker; the first shared model weight is used to determine a weight of a local model on the first worker; the first common data set is used to train the local model on the first worker, and/or the first common data set is used to determine a first data set; and the first data set is an output data set obtained by processing the first common data set by the local model on the first worker.

In this embodiment of this application, the central node sends, to the at least one worker, the first common data set, or the first common data set and the first shared model weight, so that the first worker trains the local model and/or determines the first data set based on the first common data set. This helps restrict working manners of local models on the at least one worker to being similar by restricting results for the local models on the at least one worker on a same common data set (for example, the first common data set) to being similar, thereby helping avoid overfitting of the local models, and improving a model training effect.

In some possible implementations, after the sending, to the at least one worker, the first common data set, or the first common data set and the first shared model weight, the method further includes: sending, to the at least one worker, a second common data set, or the second common data set and a second shared model weight, where the second shared model weight is used to determine a weight of the local model on the first worker; the second common data set is used to train the local model on the first worker, and/or the second common data set is used to determine a second data set; and the second data set is an output data set obtained by processing the second common data set by the local model on the first worker.

In some possible implementations, the second common data set is determined based on a first output data set fed back by the at least one worker, the second shared model weight is determined based on a first weight update value and/or the first output data set that are/is fed back by the at least one worker, the first output data set is an output data set obtained by processing the first common data set by the first worker by using the local model, and the first weight update value is an update value for the first shared model weight in a process in which the first worker trains the local model.

In some possible implementations, after the sending, to the at least one worker, the first common data set, or the first common data set and the first shared model weight, the method further includes: receiving the first output data set from the first worker, where the first output data set is the output data set obtained by processing the first common data set by the first worker by using the local model.

In some possible implementations, before the receiving the first output data set from the first worker, the method further includes: sending first information to the first worker, where the first information indicates a first time-frequency resource position for feeding back the first output data set to the central node.

In some possible implementations, when the first output data set includes an explanation label, the method further includes: sending, to the first worker, indication information that indicates a type of the explanation label in the first output data set, where the explanation label in the first output data set is used to explain processing performed on output data in the first output data set by the local model on the worker.

In some possible implementations, the first output data set includes the output data, a label corresponding to the output data, and/or the explanation label corresponding to the output data, and the explanation label is used to explain the processing performed on the output data by the local model on the worker.

In some possible implementations, after the sending, to the at least one worker, the first common data set, or the first common data set and the first shared model weight, the method further includes: receiving the first weight update value from the first worker, where the first weight update value is the update value for the first shared model weight in the process in which the first worker trains the local model.

In some possible implementations, before the receiving the first weight update value from the first worker, the method further includes: sending second information to the first worker, where the second information indicates a second time-frequency resource position for feeding back the first weight update value to the central node.

In some possible implementations, the method further includes: sending third information to the first worker, where the third information indicates that the first worker needs to feed back the first output data set and/or the first weight update value.

In some possible implementations, before the sending, to the at least one worker, the first common data set, or the first common data set and the first shared model weight, the method further includes: receiving fourth information from the first worker, where the fourth information indicates that the first worker needs to use the first common data set and/or the first shared model weight.

In some possible implementations, before the sending, to the at least one worker, the first common data set, or the first common data set and the first shared model weight, the method further includes: sending fifth information to the first worker, where the fifth information indicates a third time-frequency resource position for sending the first common data set by the central node.

In some possible implementations, before the sending, to the at least one worker, the first common data set, or the first common data set and the first shared model weight, the method further includes: sending sixth information to the first worker, where the sixth information indicates a fourth time-frequency resource position for sending the first shared model weight by the central node.

In some possible implementations, the method further includes: sending, to the first worker, indication information that indicates the first worker to use specific common data in the first common data set to determine the first data set.

In some possible implementations, when the first common data set includes the explanation label, the method further includes: sending, to the first worker, indication information that indicates a type of the explanation label in the first common data set, where the explanation label in the first common data set is used to explain processing performed on common data by the local model on the worker.

In some possible implementations, the first common data set includes the common data, a label corresponding to the common data, and/or the explanation label corresponding to the common data, and the explanation label is used to explain the processing performed on the common data by the local model on the worker.

In some possible implementations, the method further includes: sending the first shared model weight to a second worker, where the first shared model weight is further used to determine a weight of a local model on the second worker.

In some possible implementations, the method further includes: sending seventh information to the second worker, where the seventh information indicates a second time-frequency resource position for sending the first shared model weight by the central node.

In some possible implementations, after the sending the first shared model weight to the second worker, the method further includes: sending the second shared model weight to the second worker, where the second shared model weight is used to determine a weight of the local model on the second worker, the second shared model weight is determined based on the first weight update value and/or the first output data set that are/is fed back by the at least one worker, and a second weight update value fed back by at least one second worker, the first weight update value is the update value for the first shared model weight in the process in which the first worker trains the local model, the first output data set is the output data set obtained by processing the first common data set by the first worker by using the local model, and the second weight update value is an update value for the first shared model weight in a process in which the second worker trains the local model.

In some possible implementations, after the sending the first shared model weight to the second worker, the method further includes: receiving the second weight update value from the second worker, where the second weight update value is the update value for the first shared model weight in the process in which the second worker trains the local model.

In some possible implementations, the method further includes: sending eighth information to the second worker, where the eighth information indicates a fifth time-frequency resource position for feeding back the second weight update value to the central node.

In some possible implementations, the method further includes: sending ninth information to the second worker, where the ninth information indicates that the second worker needs to feed back the second weight update value.

In some possible implementations, before the sending the first shared model weight to the second worker, the method further includes: receiving tenth information from the second worker, where the tenth information indicates that the second worker needs to use the first shared model weight.

According to a second aspect, a model training method is provided. The method is applied to a first worker and includes: receiving, from a central node, a first common data set, or the first common data set and a first shared model weight, where the first shared model weight is used to determine a weight of a local model on the first worker; the first common data set is used to train the local model on the first worker, and/or the first common data set is used to determine a first data set; and the first data set is an output data set obtained by processing the first common data set by the local model on the first worker.

In this embodiment of this application, the first worker receives, from the central node, the first common data set, or the first common data set and the first shared model weight, so that the first worker trains the local model and/or determines the first data set based on the first common data set. This helps restrict working manners of local models on at least one worker to being similar by restricting results for the local models on the at least one worker on a same common data set (for example, the first common data set) to being similar, thereby helping avoid overfitting of the local models, and improving a model training effect.

In some possible implementations, after the receiving, from the central node, the first common data set, or the first common data set and the first shared model weight, the method further includes: receiving, from the central node, a second common data set, or the second common data set and a second shared model weight, where the second shared model weight is used to determine a weight of the local model on the first worker; the second common data set is used to train the local model on the first worker, and/or the second common data set is used to determine a second data set; and the second data set is an output data set obtained by processing the second common data set by the local model on the first worker.

In some possible implementations, the second common data set is determined based on a first output data set fed back by the at least one worker, the at least one worker includes the first worker, the second shared model weight is determined based on a first weight update value and/or the first output data set that are/is fed back by the at least one worker, the first output data set is an output data set obtained by processing the first common data set by the first worker by using the local model, and the first weight update value is an update value for the first shared model weight in a process in which the first worker trains the local model.

In some possible implementations, the second shared model weight is further determined based on a second weight update value fed back by at least one second worker.

In some possible implementations, after the receiving, from the central node, the first common data set, or the first common data set and the first shared model weight, the method further includes: sending the first output data set to the central node, where the first output data set is the output data set obtained by processing the first common data set by the first worker by using the local model.

In some possible implementations, before the sending the first output data set to the central node, the method further includes: receiving first information from the central node, where the first information indicates a first time-frequency resource position for feeding back the first output data set to the central node.

In some possible implementations, when the first output data set includes an explanation label, the method further includes: receiving indication information that is from the central node and that indicates a type of the explanation label in the first output data set, where the explanation label in the first output data set is used to explain processing performed on output data in the first output data set by the local model on the worker.

In some possible implementations, the first output data set includes the output data, a label corresponding to the output data, and/or the explanation label corresponding to the output data, and the explanation label is used to explain the processing performed on the output data by the local model on the worker.

In some possible implementations, after the receiving, from the central node, the first common data set, or the first common data set and the first shared model weight, the method further includes: sending the first weight update value to the central node, where the first weight update value is the update value for the first shared model weight in the process in which the first worker trains the local model.

In some possible implementations, before the sending the first weight update value to the central node, the method further includes: receiving second information from the central node, where the second information indicates a second time-frequency resource position for feeding back the first weight update value to the central node.

In some possible implementations, the method further includes: receiving third information from the central node, where the third information indicates that the first worker needs to feed back the first output data set and/or the first weight update value.

In some possible implementations, before the receiving, from the central node, the first common data set, or the first common data set and the first shared model weight, the method further includes: sending fourth information to the central node, where the fourth information indicates that the first worker needs to use the first common data set and/or the first shared model weight.

In some possible implementations, before the receiving, from the central node, the first common data set, or the first common data set and the first shared model weight, the method further includes: receiving fifth information from the central node, where the fifth information indicates a third time-frequency resource position for sending the first common data set by the central node.

In some possible implementations, before the receiving, from the central node, the first common data set, or the first common data set and the first shared model weight, the method further includes: receiving sixth information from the central node, where the sixth information indicates a fourth time-frequency resource position for sending the first shared model weight by the central node.

In some possible implementations, when the first common data set includes the explanation label, the method further includes: receiving indication information that is from the central node and that indicates a type of the explanation label in the first common data set, where the explanation label in the first common data set is used to explain processing performed on common data by the local model on the worker.

In some possible implementations, the method further includes: receiving indication information that is from the central node and that indicates the first worker to use specific common data in the first common data set to determine the first data set.

In some possible implementations, the first common data set includes the common data, a label corresponding to the common data, and/or the explanation label corresponding to the common data, and the explanation label is used to explain the processing performed on the common data by the local model on the worker.

According to a third aspect, a model training apparatus is provided. The apparatus is used in a central node and includes: a sending unit, configured to send, to at least one worker, a first common data set, or the first common data set and a first shared model weight, where the at least one worker includes a first worker; the first shared model weight is used to determine a weight of a local model on the first worker; the first common data set is used to train the local model on the first worker, and/or the first common data set is used to determine a first data set; and the first data set is an output data set obtained by processing the first common data set by the local model on the first worker.

In this embodiment of this application, the central node sends, to the at least one worker, the first common data set, or the first common data set and the first shared model weight, so that the first worker trains the local model and/or determines the first data set based on the first common data set. This helps restrict working manners of local models on the at least one worker to being similar by restricting results for the local models on the at least one worker on a same common data set (for example, the first common data set) to being similar, thereby helping avoid overfitting of the local models, and improving a model training effect.

According to a fourth aspect, a model training apparatus is provided. The apparatus is used in a first worker and includes: a receiving unit, configured to receive, from a central node, a first common data set, or the first common data set and a first shared model weight, where the first shared model weight is used to determine a weight of a local model on the first worker; the first common data set is used to train the local model on the first worker, and/or the first common data set is used to determine a first data set; and the first data set is an output data set obtained by processing the first common data set by the local model on the first worker.

In this embodiment of this application, the first worker receives, from the central node, the first common data set, or the first common data set and the first shared model weight, so that the first worker trains the local model and/or determines the first data set based on the first common data set. This helps restrict working manners of local models on at least one worker to being similar by restricting results for the local models on the at least one worker on a same common data set (for example, the first common data set) to being similar, thereby helping avoid overfitting of the local models, and improving a model training effect.

According to a fifth aspect, a model training apparatus is provided, and includes a processor and a storage, where the processor is coupled to the storage, the storage is configured to store a computer program (which may also be referred to as code or instructions), and when the computer program is executed by the processor, the apparatus is caused to perform the method according to any one of the first aspect or the possible implementations of the first aspect.

In some possible implementations, the apparatus further includes the storage coupled to the processor.

In some possible implementations, there are one or more processors, and/or one or more storages.

In some possible implementations, the storage and the processor may be integrated together, or the storage and the processor are disposed separately.

According to a sixth aspect, a model training apparatus is provided, and includes a processor and a storage, where the processor is coupled to the storage, the storage is configured to store a computer program (which may also be referred to as code or instructions), and when the computer program is executed by the processor, the apparatus is caused to perform the method according to any one of the second aspect or the possible implementations of the second aspect.

In some possible implementations, the apparatus further includes the storage coupled to the processor.

In some possible implementations, there are one or more processors, and/or one or more storages.

In some possible implementations, the storage and the processor may be integrated together, or the storage and the processor are disposed separately.

According to a seventh aspect, a computer-readable storage medium is provided. The computer-readable storage medium stores a computer program (which may also be referred to as code or instructions). When the computer program is run on a computer, the computer is caused to perform the method according to any one of the foregoing aspects or the possible implementations of any one of the foregoing aspects.

According to an eighth aspect, a computer program product is provided, and includes a computer program (which may also be referred to as code or instructions). When the computer program is run on a computer, the computer is caused to perform the method according to any one of the foregoing aspects or the possible implementations of any one of the foregoing aspects.

According to a ninth aspect, a chip is provided, and includes a processor and a storage, where the storage is configured to store a computer program (which may also be referred to as code or instructions), and the processor is configured to invoke and run the computer program stored in the storage, to cause an apparatus or a device on which the chip is installed to perform the method according to any one of the foregoing aspects or the possible implementations of any one of the foregoing aspects.

### BRIEF DESCRIPTION OF DRAWINGS

FIG. 1 is a block diagram of a wireless communication system to which this application is applicable;
FIG. 2 is a block diagram of another wireless communication system to which this application is applicable;
FIG. 3 is a diagram of a structure of a neural network according to this application;
FIG. 4a, FIG, 4b, and FIG. 4c are a schematic flowchart of a model training method according to an embodiment of this application;
FIG. 5 is a diagram of a plurality of types of workers supported according to an embodiment of this application;
FIG. 6 is a diagram of feeding back data by a plurality of types of workers according to an embodiment of this application;
FIG. 7 is a schematic flowchart of a model training method according to another embodiment of this application;
FIG. 8 is a schematic flowchart of a model training method according to still another embodiment of this application;
FIG. 9 is a schematic flowchart of a model training method according to still another embodiment of this application;
FIG. 10 is a diagram of a structure of a model training apparatus according to an embodiment of this application;
FIG. 11 is a diagram of a structure of a model training apparatus according to another embodiment of this application; and
FIG. 12 is a diagram of a structure of an apparatus according to an embodiment of this application.

### DESCRIPTION OF EMBODIMENTS

The following describes the technical solutions in embodiments of this application with reference to the accompanying drawings in embodiments of this application.

In the descriptions of this application, unless otherwise specified, "/" indicates an "or" relationship between associated objects. For example, A/B may indicate A or B. "And/or" in this specification merely describes an association relationship between the associated objects, and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or may be plural. In addition, for ease of clearly describing the technical solutions in embodiments of this application, terms such as "first" and "second" are used in embodiments of this application to distinguish between same items or similar items that provide basically the same functions or purposes. A person skilled in the art may understand that the terms such as "first" and "second" do not limit a quantity or an execution sequence, and the terms such as "first" and "second" do not indicate a definite difference. It should be understood that, in this application, similar descriptions such as "in a case that...", "if...", "when...", " it is assumed that..." may be used interchangeably.

The technical solutions in embodiments of this application may be applied to various communication systems such as a 5th generation (5th generation, 5G) system, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system or a satellite communication system.

A communication system to which embodiments of this application are applied may include a first entity and a second entity. The first entity and the second entity may communicate with each other. For example, the first entity may send configuration information to the second entity, and send data to the second entity, or receive data sent by the second entity. The second entity may receive the configuration information sent by the first entity, and receive, based on the configuration information, the data sent by the first entity, or send the data to the first entity based on the configuration information.

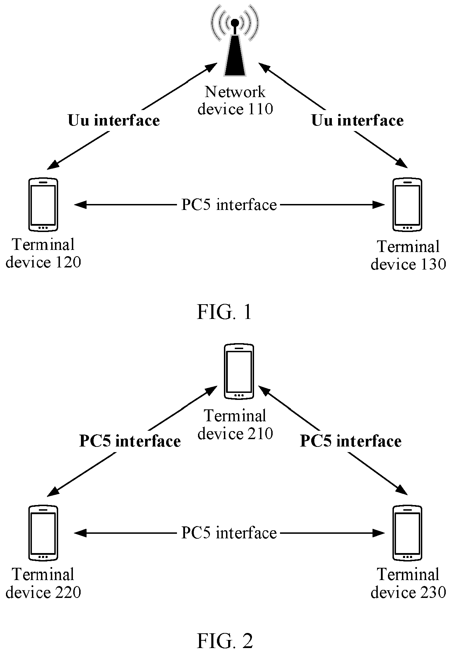

The first entity may be a network device 110 in FIG. 1, and the second entity may be a terminal device 120 or a terminal device 130 in FIG. 1. Alternatively, the first entity may be a terminal device 210 in FIG. 2, and the second entity may be a terminal device 220 or a terminal device 230 in FIG. 2. Alternatively, the first entity and the second entity may be other network entities in a wireless communication system. This is not limited in embodiments of this application.

The following describes a wireless communication system 100 in FIG. 1 and a wireless communication system 200 in FIG. 2.

FIG. 1 shows the wireless communication system 100 to which an embodiment of this application is applied. The wireless communication system 100 may include the network device 110, the terminal device 120, and the terminal device 130. The network device 110 may provide communication coverage (or may be referred to as network coverage) for a specific geographical area. The terminal device 120 and the terminal device 130 may access a network (for example, a wireless network) via the network device 110. The network device 110 may communicate with each of the terminal device 120 and the terminal device 130 through a Uu interface. The terminal device 120 and the terminal device 130 may communicate with each other through a PC5 interface.

FIG. 1 shows one network device and two terminal devices as an example. Optionally, the wireless communication system 100 may include a plurality of network devices, and a coverage range of each network device may include another quantity of terminal devices. This is not limited in embodiments of this application. Optionally, the wireless communication system 100 may further include other network elements or network entities, for example, a network controller and a mobility management entity. This is not limited in embodiments of this application.

FIG. 2 shows the wireless communication system 200 to which an embodiment of this application is applied. The wireless communication system 200 may include the terminal device 210, the terminal device 220, and the terminal device 230. The terminal device 210 may provide sidelink (sidelink, SL) signals for the terminal device 220 and the terminal device 230. The terminal device 210 may communicate with each of the terminal device 220 and the terminal device 230 on a sidelink through a PC5 interface. The terminal device 220 and the terminal device 230 may also communicate with each other on a sidelink through a PC5 interface. Optionally, one or more of the terminal device 210, the terminal device 220, and the terminal device 230 may be within the network coverage mentioned by the network device.

FIG. 2 shows three terminal devices as an example. Optionally, the wireless communication system 200 may include a plurality of terminal devices that provide sidelink signals, and each terminal device may provide a sidelink signal for another quantity of terminal devices. This is not limited in embodiments of this application. Optionally, the wireless communication system 200 may further include other network elements or network entities, for example, a network device, a network controller, and a mobility management entity. This is not limited in embodiments of this application.

The terminal device in embodiments of this application may be user equipment (user equipment, UE), a station (station), an access terminal, a subscriber unit, a subscriber station, a mobile station (mobile station, MS), a remote station, a remote terminal, a mobile terminal (mobile terminal, MT), a user terminal, a terminal, a wireless communication device, a user agent, a user apparatus, or the like. This is not limited in embodiments of this application. The terminal device in embodiments of this application may alternatively be a mobile phone, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a large screen, a vehicle-mounted device, a wearable device, a terminal device in a 5G network, a terminal device in a future evolved public land mobile network (public land mobile network, PLMN), or the like. This is not limited in embodiments of this application. The terminal device in embodiments of this application may alternatively be a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. This is not limited in embodiments of this application.

In some embodiments, the terminal device may be configured to serve as a base station. Optionally, the terminal device may serve as a scheduling entity, to provide a sidelink signal between terminal devices in vehicle-to-everything (vehicle-to-everything, V2X), device-to-device (device-to-device, D2D), or the like. For example, a cellular phone and a vehicle may communicate with each other by using a sidelink signal, or a cellular phone and a smart home device may communicate with each other by using a sidelink signal, without relaying a communication signal via a base station.

The network device in embodiments of this application may be a radio access network (radio access network, RAN) node (or device) that connects a terminal device to a wireless network, and may also be referred to as a base station. For example, the network device may be a NodeB (NodeB), an evolved NodeB (evolved NodeB, eNodeB), a next-generation NodeB (next-generation NodeB, gNB) in a 5G mobile communication system, a transmission reception point (transmission reception point, TRP), an access point (access point, AP), a base station in a future mobile communication system or an access node (access point, AP) in a Wi-Fi system, a radio controller in a cloud radio access network (cloud radio access network, CRAN) scenario, a relay station, an access point, a vehicle-mounted device, a wearable device, a network device in another future evolved communication system, or the like.

In some embodiments, a plurality of RAN nodes collaborate to assist the terminal device in implementing radio access, and different RAN nodes may separately implement some functions of the base station. For example, the RAN node (namely, the network device in this application) may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may have different names, but a person skilled in the art may understand meanings thereof. For example, in an open radio access network (open radio access network, ORAN) system, the CU may also be referred to as an open CU (open CU, O-CU), the DU may also be referred to as an open DU (open DU, O-DU), the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of the software module and the hardware module. It should be understood that a specific technology and a specific device form that are used by the network device are not limited in this application.

In some embodiments, the network device may be fixed or movable. This is not limited in embodiments of this application. For example, a helicopter or an uncrewed aerial vehicle may be configured as a mobile network device, and one or more cells may be moved based on a position of the mobile network device. In another example, a helicopter or an uncrewed aerial vehicle may be configured as a device for communicating with another network device.

In some embodiments, the network device may be deployed on land, or may be deployed in the air. This is not limited in embodiments of this application. For example, the network device may be deployed on land, including an indoor device, an outdoor device, a handheld device, or a vehicle-mounted device, may be deployed on water, or may be deployed on an airplane, a balloon, or a satellite in the air.

In embodiments of this application, the terminal device or the network device may include a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that the execution body can run a program that records code for the method provided in embodiments of this application, to perform communication according to the method provided in embodiments of this application.

In addition, aspects or features of this application may be implemented as a method, an apparatus, or a product that uses standard programming and/or engineering technologies. The term "product" used in this application covers a computer program that can be accessed from any computer-readable device, carrier or medium. For example, the computer-readable medium may include but is not limited to: a magnetic storage device (for example, a hard disk, a floppy disk, or a magnetic tape), an optical disc (for example, a compact disc (compact disc, CD), a digital versatile disc (digital versatile disc, DVD)), a smart card, and a flash memory device (for example, an erasable programmable read-only memory (erasable programmable read-only memory, EPROM), a card, a stick, a key drive, or the like). In addition, various storage media described in this specification may represent one or more devices and/or other machine-readable media that are configured to store information. The term "machine-readable media" may include but is not limited to a radio channel, and various other media that can store, contain, and/or carry instructions and/or data.

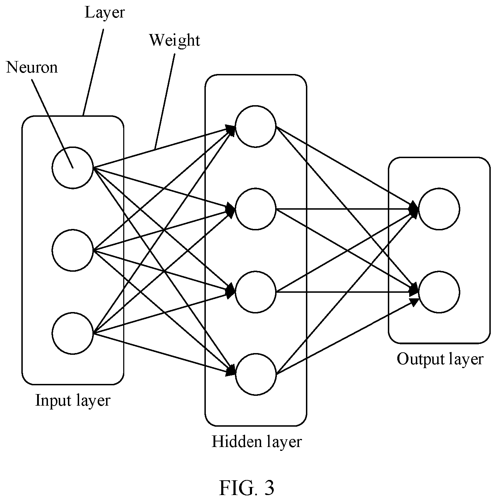

Before embodiments of this application are described, related terms in this application are first described.
1. Artificial intelligence (artificial intelligence, AI): Artificial intelligence enables machines to learn and accumulate experience, to resolve problems, such as natural language understanding, image recognition, and chess playing, that can be resolved by humans through experience.
2. Machine learning (machine learning, ML): Machine learning is an implementation of artificial intelligence. Machine learning is a method that enables machines to learn, so that the machines can implement functions that cannot be implemented through direct programming. In practice, machine learning is a method of training a model by using data and then performing prediction by using the model.
3. Neural network (neural network, NN): The neural network is a specific manifestation of a machine learning method. The neural network is a mathematical model that imitates animal neural network behavior features for information processing. As shown in FIG. 3, the neural network may be a network including three types of computing layers: an input layer, a hidden layer, and an output layer. Each layer (layer) may have one or more logic determining units, and such a logic determining unit may be referred to as a neuron (neuron). Common neural network structures include a feedforward neural network (feedforward neural network, FNN), a convolutional neural network (convolutional neural network, CNN), a recurrent neural network (recurrent neural network, RNN), and the like. These network structures are formed based on neurons. Each neuron performs a weighted summation operation on input values of the neuron, and a weighted summation result is passed through a non-linear function to generate an output. In this case, a weight value of the weighted summation operation of the neuron in the neural network and the non-linear function are referred to as parameters of the neural network. A connection relationship between neurons in a neural network may be referred to as a weight (weight) of the neural network, and weights of all neurons in the neural network may constitute parameters of the neural network (which may also be referred to as weights of the neural network).
4. Deep neural network (deep neural network, DNN): The deep neural network is a neural network having a plurality of hidden layers.
5. Deep learning (deep learning, DL): Deep learning is machine learning performed based on the deep neural network.

With the rapid development of AI technologies, application scenarios of AI models (for example, a neural network model) are increasingly wide, including smart healthcare, finance, a smart city, an intelligent network, and the like. For example, the AI models may be introduced into some communication systems to implement network intelligence. Usually, the AI models need to be trained before use. Therefore, how to effectively train an AI model in a specific application scenario becomes an important research direction.

AI model training includes three important factors, which are respectively training data, a model, and a computing platform (for example, a neural network computing platform). With the widespread deployment of graphic processing units (graphic processing units, GPUs), more devices have computing platforms. Therefore, obtaining training data becomes a key to training required AI models by the devices. However, private data included in a single device is usually limited, and using only the limited private data to perform model training easily causes model overfitting. In addition, the private data usually involves user privacy. Obtaining private data of another device to expand a training set can avoid model overfitting, but causes a risk of user privacy leakage.

Federated learning (federated learning, FL) is a distributed model training method, which enables a plurality of terminal devices to collaborate to train AI models while protecting user privacy and data security. Therefore, training the AI model based on federated learning can resolve the foregoing problems.

For example, the AI model may be trained by using the following several federated learning systems:

### (I) Basic federated learning system

The basic federated learning system may include one central serving node (which may also be referred to as a central node for short) and N workers, where N is a positive integer greater than 1. The N workers can implement similar functions. Each of the N workers may include specific private data, and the private data may be used to train a local model. In addition, the central serving node may interact with each of the N workers.

A basic idea of basic federated learning may be as follows: One copy (denoted as w) of a same common model may be deployed on each worker, and each worker may update, by using private data of the worker, the deployed copy of the common model and obtain an update value for the common model. For example, a worker i may update the common model and obtain an update value w_{new,i} = w + Δ*ᵢ* for the common model, where i is a positive integer greater than or equal to 1. Further, the N workers may respectively feed back update values Δ*ᵢ* for the common model to the central serving node, and the central serving node performs weighted averaging on the N update values, to obtain an average update value $Δ = \frac{1}{N} {\sum }_{i = 1}^{N} {Δ}_{i}$. Further, the central serving node may deliver the average update value Δ to the N workers, and the N workers may respectively update copies of the N workers to w + Δ.

After the copies are updated, the N workers may locally and repeatedly iterate the foregoing model update operation or a local model training operation until the model converges, or until another condition is met.

It can be learned that, in the basic federated learning system, different compute nodes (namely, workers) fully share the common model, and cannot adaptively design the model for local data (namely, private data) of the compute nodes. When private data of different compute nodes differs greatly, fully sharing a model parameter may cause deterioration in performance of the model. In addition, in the basic federated learning system, all compute nodes are required to have a same model processing capability.

### (II) Federated learning system with partial model sharing

The federated learning system with partial model sharing may include one central serving node and N workers, where N is a positive integer greater than 1. The N workers can implement similar functions. Each of the N workers includes specific private data, and the private data may be used to train a local model. In addition, the central serving node may interact with each of the N workers.

A basic idea of the federated learning with partial model sharing may be as follows: One copy (denoted as w) of a common model is deployed on each worker, and each worker may concatenate the deployed copy of the common model and a private model on the worker to obtain a new model, and update the new model by using private data of the worker, to obtain an update value for the new model. For example, a worker i may concatenate a deployed copy of the common model and a private model *qᵢ* on the worker to obtain a new model, and update the new model by using private data of the worker, to obtain update values w_{new,i} = w + Δ*ᵢ* and q_{new,i} = *qᵢ* + Δ*_{q,i}* for the new model. Further, the N workers may respectively feed back, update values Δ*ᵢ* for the common model to the central serving node, and the central serving node performs weighted averaging on the N update values, to obtain an average update value $Δ = \frac{1}{N} {\sum }_{i = 1}^{N} {Δ}_{i}$ . Further, the central serving node may deliver the average update value Δ to the N workers, and the N workers may respectively update copies of the N workers to w + Δ.

After the copies are updated, the N workers may locally and repeatedly iterate the foregoing model update operation or a local model training operation until the model converges, or until another condition is met.

In the federated learning system with partial model sharing, reducing a weight of a globally shared part (that is, the common model) can improve adaptability to a difference between compute nodes. However, when a weight of a private model is excessively high, the model may easily cause overfitting of a local data set. In this case, proportions of the common model and the private model need to be finely adjusted. In addition, in the federated learning system with partial model sharing, all compute nodes are required to have a capability of processing the common model part.

In conclusion, the existing federated learning-based model training methods still have some problems. For example, due to an excessively large difference between private data of workers, performance of a trained model may be poor; different types of workers cannot be supported; and when a difference exists between a worker and another worker, proportions of a common model and a private model on the worker need to be finely adjusted, which is difficult to adjust, and increases training costs.

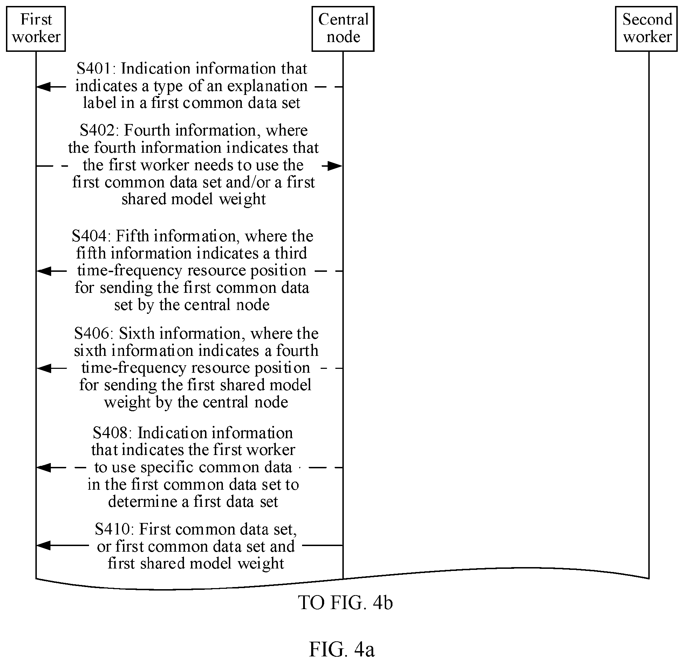

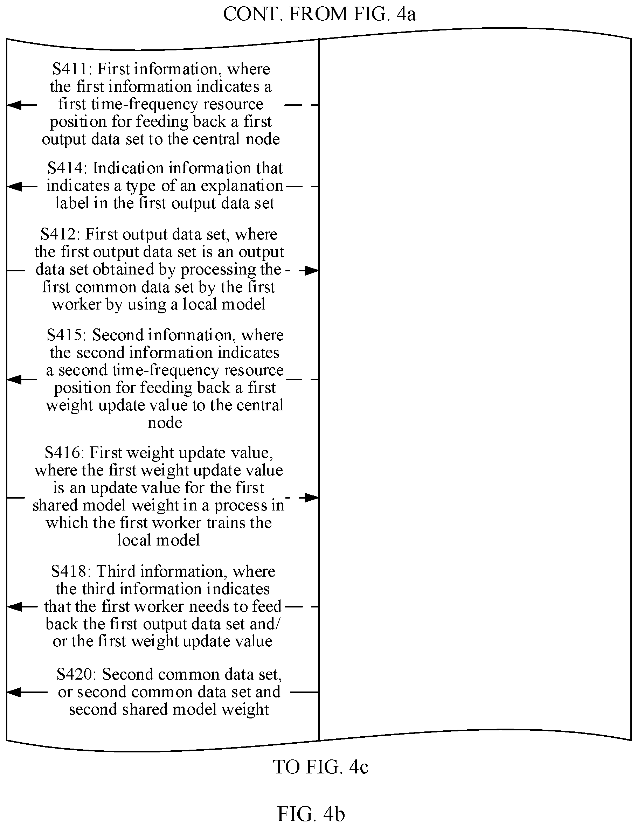

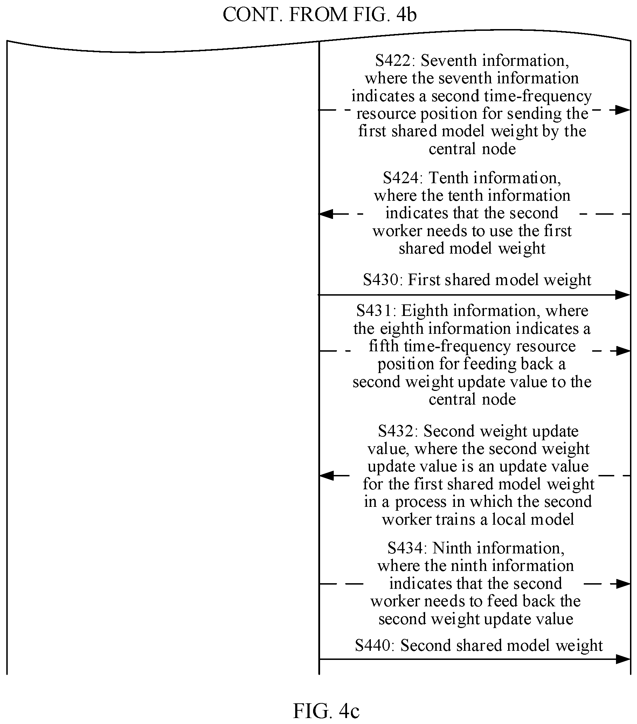

To resolve one or more of the foregoing technical problems, this application provides a model training method, an apparatus, and a communication method and apparatus. With reference to FIG. 4a, FIG. 4b, and FIG. 4c, the following describes in detail the model training method in embodiments of this application by using an example.

FIG. 4a, FIG. 4b, and FIG. 4c are a schematic flowchart of a model training method according to an embodiment of this application. The method 400 shown in FIG. 4a, FIG. 4b, and FIG. 4c may include step S410, which is specifically as follows:
S410: A central node sends, to a first worker, a first common data set, or the first common data set and a first shared model weight.

The central node may be the first entity in the foregoing embodiments, and the first worker may be the second entity in the foregoing embodiments. For example, the central node may be the network device 110 in FIG. 1, and the first worker may be the terminal device 120 or the terminal device 130 in FIG. 1. Alternatively, the central node may be the terminal device 210 in FIG. 2, and the first worker may be the terminal device 220 or the terminal device 230 in FIG. 2. Alternatively, the central node and the first worker may be other network entities in a wireless communication system. This is not limited in embodiments of this application.

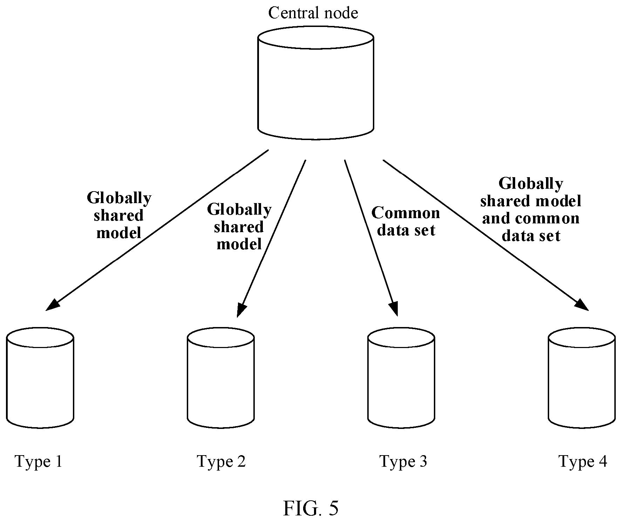

In some embodiments, the first worker may be a worker of a type 3 or a worker of a type 4 shown in FIG. 5.

Optionally, the first worker may be one of at least one worker. Optionally, the central node may send, to the at least one worker, the first common data set, or the first common data set and the first shared model weight.

In some embodiments, the first shared model weight (where the first shared model weight may also be referred to as a first shared model for short) may be used to determine a weight of a local model on the first worker. The weight herein may be understood as a parameter of a neural network model. The local model on the first worker may be understood as a model that needs to be trained and that is on the first worker.

For example, the first shared model weight may be used as an initial value of the weight of the local model on the first worker. Alternatively, the first shared model weight and a weight of a private model on the first worker may be concatenated, to obtain a local model. In other words, the first shared model weight and the weight of the private model on the first worker are concatenated as an initial value of the weight of the local model on the first worker.

Alternatively, the weight of the private model on the first worker may be used as an initial value of the weight of the local model on the first worker.

In some embodiments, the first common data set may be used to train the local model on the first worker, and/or the first common data set may be used to determine a first data set. The first data set may be an output data set obtained by processing the first common data set by the local model on the first worker.

For example, the first common data set may be used as a training data set, to train the local model on the first worker. Alternatively, the first common data set may be input into a local model on the first worker (for example, a local model that is trained based on the first common data set and that is on the first worker), to obtain the first data set. Alternatively, the first common data set may be first used as a training data set to train the local model on the first worker, and then the first common data set may be input into a trained local model on the first worker, to obtain the first data set.

The first common data set may include common data, a label corresponding to the common data, and/or an explanation label corresponding to the common data. The explanation label in the first common data set may be used to explain processing performed on the common data by a local model on a worker, or may be used to explain a reason why the local model on the worker obtains a specific output result by processing the common data. For example, the explanation label in the first common data set may be used to explain: processing performed on the common data in the first common data set by the first worker in a subsequent process of training the local model by using the first common data set; or a reason why the local model on the first worker obtains specific output data in a first output data set by processing the common data in the first common data set.

Optionally, the explanation label in the first common data set may be obtained by using methods, such as local interpretable model-agnostic explanations (local interpretable model-agnostic explanations, LIME), and Shapley additive explanations (Shapley additive explanations, SHAPLEY).

In some embodiments, when the first common data set includes the explanation label, the central node may indicate, to the first worker, a type of the explanation label in the first common data set. For example, the method 400 may further include step S401, which is specifically as follows:

S401: The central node sends, to the first worker, indication information that indicates the type of the explanation label in the first common data set. The explanation label in the first common data set may be used to explain the processing performed on the common data by the local model on the worker, or may be used to explain the reason why the local model on the worker obtains the specific output result by processing the common data. For example, explanation labels (in the first common data set) that are obtained by using different methods may be of different types.

For example, the explanation label in the first common data set may be used to explain a specific method used by the local model on the first worker to process the first common data set. Alternatively, the explanation label may be used to explain specific processing performed on the first common data set by the local model on the first worker. Alternatively, the explanation label may be used to explain the reason why the local model on the first worker obtains the specific output data in the first output data set by processing the first common data set. Alternatively, the explanation label may be used to explain other content (or information) in a process in which the local model on the first worker processes the first common data set. The type of the explanation label in the first common data set may indicate content (or information) indicated by the explanation label or a method used to obtain the explanation label.

In this embodiment of this application, the central node sends, to the at least one worker, the first common data set, or the first common data set and the first shared model weight, so that the first worker trains the local model and/or determines the first data set based on the first common data set. This helps restrict working manners of local models on the at least one worker to being similar by restricting results for the local models on the at least one worker on a same common data set (for example, the first common data set) to being similar, thereby helping avoid overfitting of the local models, and improving a model training effect.

In some embodiments, before S410, the first worker may report, to the central node, a data type required by the first worker. For example, before S410, the method 400 may further include step S402, which is specifically as follows:
S402: The first worker sends fourth information to the central node. The fourth information may indicate that the first worker needs to use the first common data set and/or the first shared model weight.

In some embodiments, before S410, the central node may indicate, to the first worker, a time-frequency resource position for sending the first common data set by the central node. In this embodiment of this application, the time-frequency resource position may include a time domain resource position and/or a frequency domain resource position. For example, before S410, the method 400 may further include step S404, which is specifically as follows:
S404: The central node sends fifth information to the first worker. The fifth information may indicate a third time-frequency resource position for sending the first common data set by the central node.

In some embodiments, before S410, the central node may indicate, to the first worker, a time-frequency resource position for sending the first shared model weight by the central node. For example, before S410, the method 400 may further include step S406, which is specifically as follows:
S406: The central node sends sixth information to the first worker. The sixth information may indicate a fourth time-frequency resource position for sending the first shared model weight by the central node.

In some embodiments, the central node may indicate the first worker to use specific common data in the first common data set to determine the first data set. For example, the method 400 may further include step S408, which is specifically as follows:
S408: The central node sends, to the first worker, indication information that indicates the first worker to use the specific common data in the first common data set to determine the first data set.

In some embodiments, after S410, the first worker may report, to the central node, an output data set obtained by the first worker by processing the first common data set by using the local model (for example, the trained local model). For example, after S410, the method 400 may further include step S412, which is specifically as follows:
S412: The first worker sends a first output data set to the central node. The first output data set may be an output data set obtained by the first worker by processing the first common data set by using the local model (for example, the local model that is trained based on the first common data set and that is on the first worker).

The first output data set may include output data and/or an explanation label corresponding to the output data. The explanation label in the first output data set may be used to explain processing performed by a local model on a worker to obtain the output data, or may be used to explain a reason why the local model on the worker obtains the output data. For example, the explanation label in the first output data set may be used to explain: processing performed on the common data in the first common data set by the local model on the first worker to obtain the first output data set; or a reason why the local model on the first worker obtains specific output data in the first output data set by processing the common data in the first common data set.

Optionally, the explanation label in the first output data set may be obtained by using the methods, for example, LIME and SHAPLEY.

In some embodiments, before S412, the central node may indicate, to the first worker, a time-frequency resource position for sending the first output data set. For example, before S412, the method 400 may further include step S411, which is specifically as follows:
S411: The central node sends first information to the first worker. The first information may indicate a first time-frequency resource position for feeding back the first output data set to the central node.

In some embodiments, when the first output data set includes an explanation label, the central node may indicate, to the first worker, a type of the explanation label in the first output data set. For example, the method 400 may further include step S414, which is specifically as follows:
S414: The central node sends, to the first worker, indication information that indicates the type of the explanation label in the first output data set. The explanation label in the first output data set may be used to explain the processing performed by the local model on the worker to obtain the output data in the first output data set, or may be used to explain the reason why the local model on the worker obtains the specific output data in the first output data set. For example, explanation labels (in the first output data set) that are obtained by using different methods may be of different types.

For example, the explanation label in the first output data set may be used to explain a specific method used by the local model on the first worker to obtain the first output data set. Alternatively, the explanation label may be used to explain specific processing performed by the local model on the first worker to obtain the first output data set. Alternatively, the explanation label may be used to explain the reason why the local model on the first worker obtains the specific output data in the first output data set. Alternatively, the explanation label may be used to explain other content (or information) in a process in which the local model on the first worker obtains the first output data set. The type of the explanation label in the first output data set may indicate content (or information) indicated by the explanation label or a method used to obtain the explanation label.

In some embodiments, after S410, the first worker may report, to the central node, an update value for the first shared model weight in a process in which the first worker trains the local model. For example, after S410, the method 400 may further include step S416, which is specifically as follows:
S416: The first worker sends a first weight update value to the central node. The first weight update value may be the update value for the first shared model weight in the process in which the first worker trains the local model.

For example, the first worker may use the first shared model weight as the initial value of the weight of the local model to train the local model, and update the weight of the local model based on a loss value obtained through the training. In this case, an update value for the weight of the local model may be used as the update value for the first shared model weight, that is, the first weight update value.

For another example, the first worker may use the first shared model weight as an initial value of a weight of a globally shared model, concatenate the globally shared model and the private model on the first worker to obtain a model, use, as an initial value of the local model, the model obtained through the concatenation, train the local model, and update a weight of the local model (including the weight of the globally shared model and a weight of the private model) based on a loss value obtained through the training (where the loss value includes a loss value of the globally shared model and a loss value of the private model). In this case, an update value for the weight of the globally shared model may be used as the update value for the first shared model weight, that is, the first weight update value.

In some embodiments, before S416, the central node may indicate, to the first worker, a time-frequency resource position for sending the first weight update value. For example, before S416, the method 400 may further include step S415, which is specifically as follows:
S415: The central node sends second information to the first worker. The second information may indicate a second time-frequency resource position for feeding back the first weight update value to the central node.

In some embodiments, the central node may indicate, to the first worker, that the first worker needs to feed back the first output data set and/or the first weight update value. For example, the method 400 may further include step S418, which is specifically as follows:
S418: The central node sends third information to the first worker. The third information may indicate that the first worker needs to feed back the first output data set and/or the first weight update value.

In some embodiments, after S410, the method 400 may further include step S420, which is specifically as follows:
S420: The central node sends, to the first worker, a second common data set, or the second common data set and a second shared model weight.

Optionally, the central node may send, to the at least one worker, the second common data set, or the second common data set and the second shared model weight.

In some embodiments, the second shared model weight may be used to determine a weight of the local model on the first worker.

For example, the second shared model weight may be used as an initial value of the weight of the local model on the first worker. Alternatively, the second shared model weight and a weight of the private model on the first worker may be concatenated, to obtain a local model. In other words, the second shared model weight and the weight of the private model on the first worker are concatenated as an initial value of the weight of the local model on the first worker.

In some embodiments, the second common data set may be used to train the local model on the first worker, and/or the second common data set may be used to determine a second data set. The second data set may be an output data set obtained by processing the second common data set by the local model on the first worker.

For example, the second common data set may be used as a training data set, to train the local model on the first worker. Alternatively, the second common data set may be input into a local model on the first worker (for example, a local model that is trained based on the second common data set and that is on the first worker), to obtain the second data set. Alternatively, the second common data set may be first used as a training data set to train the local model on the first worker, and then the second common data set may be input into a trained local model on the first worker, to obtain the second data set.

In some embodiments, the second common data set may be determined based on an output data set (for example, the first output data set) fed back by the first worker. Optionally, the second common data set may be determined based on a first output data set fed back by the at least one worker (including the first worker).

Optionally, after receiving first output data sets fed back by N workers, the central node may perform weighted averaging on the N first output data sets to obtain the second common data set, where N is a positive integer. For example, a first output data set fed back by an n^{th} worker (among the N workers) may include M pieces of output data, where an m^{th} piece of output data x_{m,n} is output data obtained by processing an m^{th} piece of data in the first common data set by the n^{th} worker. An output corresponding to an m^{th} piece of data in the second common data set may be obtained by performing weighted averaging on N pieces of output data {x_{m,1}, ... , x_{m,N}}, where n and m are positive integers.

It should be noted that this embodiment is merely an example rather than a limitation. In this application, the second common data set may alternatively be determined by using another method. This is not limited in embodiments of this application.

In some embodiments, the second shared model weight may be determined based on the update value, fed back by the first worker, for the shared model weight in the process in which the first worker trains the local model, and/or the output data set obtained by processing the first common data set by the local model on the first worker. Optionally, the second shared model weight may be determined based on a first weight update value and/or a first output data set that are/is fed back by the at least one worker (including the first worker).

For example, after receiving first weight update values fed back by the N workers, the central node may perform weighted averaging on the N first weight update values, to obtain the second shared model weight, where N is a positive integer. Alternatively, after receiving the first weight update values and the first output data sets that are fed back by the N workers, the central node may perform weighted averaging on the N first output data sets to obtain the second common data set, and update, based on the second common data set**,** the N first weight update values to obtain the second shared model weight. The updating the N first weight update values based on the second common data set may include: updating the N first weight update values based on the second common data set to obtain N updated weight values, and then performing weighted averaging on the N updated weight values to obtain the second shared model weight; or performing weighted averaging on the N first weight update values to obtain a weighted average weight value, and then updating the weighted average weight value based on the second common data set to obtain the second shared model weight.

It should be noted that this embodiment is merely an example rather than a limitation. In this application, the second shared model weight may alternatively be determined by using another method. This is not limited in embodiments of this application.

It should be noted that, in this embodiment of this application, a time-frequency resource position/time-frequency resource positions for sending a common data set and/or a shared model weight to the first worker by the central node may be statically configured, semi-statically configured, or dynamically configured. For example, before S420, the central node may indicate, to the first worker, a time-frequency resource position for sending the second common data set by the central node and a time-frequency resource position for sending the second shared model weight by the central node. Alternatively, the central node may directly send the second common data set to the first worker at the third time-frequency resource position, and send the second shared model weight to the first worker at the fourth time-frequency resource position.

In some embodiments, when a second worker reports, to the central node, an update value for the first shared model weight in a process in which the second worker trains a local model. The second shared model weight may be determined based on the update value, fed back by the first worker, for the shared model weight in the process in which the first worker trains the local model, and/or the output data set obtained by processing the first common data set by the local model on the first worker, and based on the update value, fed back by the second worker, for the shared model weight in the process in which the second worker trains the local model. Optionally, the second shared model weight may be determined based on a first weight update value and/or a first output data set that are/is fed back by at least one first worker, and a second weight update value fed back by at least one second worker.

For example, after receiving first weight update values fed back by N workers and second weight update values fed back by M second workers, the central node may perform weighted averaging on the N first weight update values and the M second weight update values to obtain the second shared model weight, where N and M are positive integers. Alternatively, after receiving the first weight update values and first output data sets that are fed back by the N workers, and the second weight update values fed back by the M second workers, the central node may perform weighted averaging on the N first output data sets to obtain the second common data set, and update the N first weight update values and the M second weight update values based on the second common data set to obtain the second shared model weight. The updating the N first weight update values and the M second weight update values based on the second common data set may include: updating the N first weight update values based on the second common data set to obtain N updated weight values, updating the M first weight update values based on the second common data set to obtain M updated weight values, and then performing weighted averaging on the N updated weight values and the M updated weight values to obtain the second shared model weight; or performing weighted averaging on the N first weight update values and the M second weight update values to obtain a weighted average weight value, and then updating the weighted average weight value based on the second common data set to obtain the second shared model weight.

It should be noted that this embodiment is merely an example rather than a limitation. In this application, the second shared model weight may alternatively be determined by using another method. This is not limited in embodiments of this application.

In some embodiments, the central node may further send a shared model weight to the second worker (for example, the at least one second worker). For example, the method 400 may further include step S430, which is specifically as follows:
S430: The central node sends the first shared model weight to the second worker.

The second worker (for example, the at least one second worker) may be the second entity in the foregoing embodiments. In some embodiments, the second worker may be a worker of a type 1 or a worker of a type 2 shown in FIG. 5.

In some embodiments, the first shared model weight may be used to determine a weight of the local model on the second worker. In other words, the first shared model weight may be used to determine the weight of the local model on the first worker, and may also be used to determine the weight of the local model on the second worker.

For example, the first shared model weight may be used as an initial value of the weight of the local model on the second worker. Alternatively, the first shared model weight and a weight of a private model on the second worker may be concatenated, to obtain a local model. In other words, the first shared model weight and the weight of the private model on the second worker are concatenated as an initial value of the weight of the local model on the second worker.

In some embodiments, before S430, the central node may indicate, to the second worker, a time-frequency resource position for sending the first shared model weight by the central node. For example, before S430, the method 400 may further include step S422, which is specifically as follows:
S422: The central node sends seventh information to the second worker.

The seventh information may indicate a second time-frequency resource position for sending the first shared model weight by the central node.

In some embodiments, the second time-frequency resource position may be the same as the fourth time-frequency resource position. In other words, the central node may send the first shared model weight to the first worker and the second worker at a same time-frequency resource position.

In some embodiments, before S430, the second worker may report, to the central node, a data type required by the second worker. For example, before S430, the method 400 may further include step S424, which is specifically as follows:
S424: The second worker sends tenth information to the central node.

The tenth information may indicate that the second worker needs to use the first shared model weight.

In some embodiments, after S430, the second worker may report, to the central node, an update value for the first shared model weight in a process in which the second worker trains the local model. For example, after S430, the method 400 may further include step S432, which is specifically as follows:
S432: The second worker sends a second weight update value to the central node.

The second weight update value may be an update value for the first shared model weight in the process in which the second worker trains the local model.

For example, the second worker may use the first shared model weight as the initial value of the weight of the local model, train the local model by using a private data set, and update the weight of the local model based on a loss value obtained through the training. In this case, an update value for the weight of the local model may be used as the update value for the first shared model weight, that is, the second weight update value.

For another example, the second worker may use the first shared model weight as an initial value of a weight of a globally shared model, concatenate the globally shared model and the private model on the second worker to obtain a model, use, as an initial value of the local model, the model obtained through the concatenation, train the local model, and update a weight of the local model (including the weight of the globally shared model and a weight of the private model) based on a loss value obtained through the training (where the loss value includes a loss value of the globally shared model and a loss value of the private model). In this case, an update value for the weight of the globally shared model may be used as the update value for the first shared model weight, that is, the second weight update value.

In some embodiments, before S432, the central node may indicate, to the second worker, a time-frequency resource position for sending the second weight update value. For example, before S432, the method 400 may further include step S431, which is specifically as follows:
S431: The central node sends eighth information to the second worker.

The eighth information may indicate a fifth time-frequency resource position for feeding back the second weight update value to the central node.

In some embodiments, the central node may indicate, to the second worker, that the second worker needs to feed back the second weight update value. For example, the method 400 may further include step S434, which is specifically as follows:
S434: The central node sends ninth information to the second worker.

The ninth information may indicate that the second worker needs to feed back the second weight update value.

In some embodiments, after S430, the method 400 may further include step S440, which is specifically as follows:
S440: The central node sends the second shared model weight to the second worker.

The second shared model weight may be used to determine a weight of the local model on the second worker. In other words, the second shared model weight may be used to determine the weight of the local model on the first worker, and may also be used to determine the weight of the local model on the second worker.

In some embodiments, the second shared model weight may be determined based on the update value, fed back by the first worker, for the shared model weight in the process in which the first worker trains the local model, and/or the output data set obtained by processing the first common data set by the local model on the first worker, and based on the update value, fed back by the second worker, for the shared model weight in the process in which the second worker trains the local model. Optionally, the second shared model weight may be determined based on the first weight update value and/or the first output data set that are/is fed back by the at least one worker, and the second weight update value fed back by the at least one second worker.

It should be noted that, in this embodiment of this application, a time-frequency resource position for sending a shared model weight to the second worker by the central node may be statically configured, semi-statically configured, or dynamically configured. For example, before S440, the central node may indicate, to the second worker, a time-frequency resource position for sending the second shared model weight by the central node. Alternatively, the central node may directly send the second shared model weight to the second worker at the fourth time-frequency resource position.

In the method 400, although the second worker does not directly use the common data set in the process of training the local model, the shared model weight used by the second worker to determine the weight of the local model may be determined based on the output data set fed back by the first worker. In this way, although the second worker does not directly use the common data set, the same common data set may be applied to both the first worker and the second worker by using the shared model weight (determined based on the output data set fed back by the first worker). Therefore, according to the solutions in this embodiment of this application, different types of workers joining federated learning can be supported.

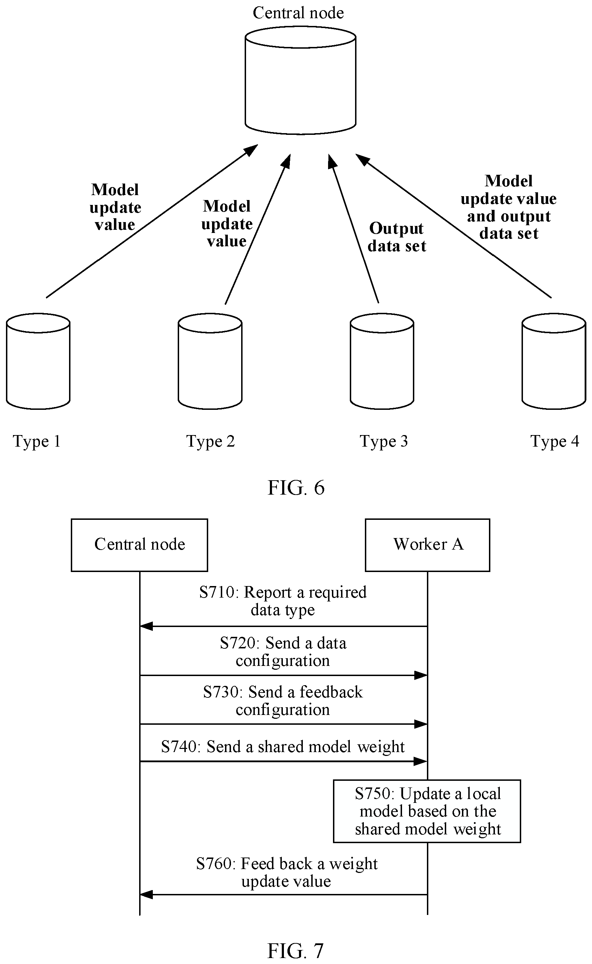

With reference to FIG. 5 and FIG. 6, the following describes examples of supporting a plurality of types of workers according to embodiments of this application.

FIG. 5 is a diagram of a plurality of types of workers supported according to an embodiment of this application. A federated learning system shown in FIG. 5 may include four types of workers, which are specifically as follows:

### Type 1: Updating a local model based on a globally shared model

A worker of the type 1 may receive a globally shared model w (for example, the first shared model weight or the second shared model weight in the foregoing embodiment) sent by a central node, use the globally shared model w as an initial value of a local model, calculate a loss function of the local model and a backward gradient Δ*ᵢ* of the loss function (which may also be understood as a weight update value for the globally shared model, for example, the second weight update value in the foregoing embodiment) on a private data set (namely, a local data set of the worker of the type 1), and update the local model to w_{new,i} = w + Δ*ᵢ*.

Further, as shown in FIG. 6, the worker of the type 1 may feed back the update value Δ*ᵢ* to a central node.

### Type 2: Updating a local model based on a globally shared model and a private model

A worker of the type 2 may receive a globally shared model w (for example, the first shared model weight or the second shared model weight in the foregoing embodiment) sent by the central node, use, as an initial value of a local model, a model that is obtained by concatenating the globally shared model w and a private model *qᵢ* on the worker, calculate a loss function of the local model, a backward gradient Δ*ᵢ* of the loss function (which may also be understood as a weight update value for the globally shared model, for example, the second weight update value in the foregoing embodiment), and Δ*_{q,i}* on a private data set, and update the local model, where an updated local model includes w_{new,i} = w + Δ*ᵢ* and q_{new,i} = *qᵢ* + Δ*_{q,i}*.

Further, as shown in FIG. 6, the worker of the type 2 may feed back the update value Δ*ᵢ* to the central node.

### Type 3: Updating a local model based on a common data set and a private data set

A worker of the type 3 may receive a common data set sent by the central node, use a private model *qᵢ* as a local model, calculate a loss function of the local model and a backward gradient Δ*_{q,i}* of the loss function on a private data set and the common data set, and update the local model to q_{new,i} = *qᵢ* + Δ*_{q,i}*.

The worker of the type 3 may further input the common data set into an updated local model q_{new,i}, to obtain an output data set (for example, the first output data set in the foregoing embodiment).

Further, as shown in FIG. 6, the worker of the type 3 may feed back the output data set to the central node.

Type 4: Updating a local model based on a globally shared model, the local model, a common data set, and a private data set

A worker of the type 4 may receive a globally shared model w and a common data set that are sent by the central node, use, as an initial value of a local model, a model that is obtained by concatenating the globally shared model w and a private model *qᵢ* on the worker, calculate a loss function of the local model, a backward gradient Δ*ᵢ* of the loss function (which may also be understood as a weight update value for the globally shared model, for example, the second weight update value in the foregoing embodiment), and Δ*_{q,i}* on a local data set and the common data set, and update the local model, where an updated local model includes w_{new,i} = w + Δ*ᵢ* and q_{new,i} = *qᵢ* + Δ*_{q,i}*.

The worker of the type 4 may further input the common data set into the updated local model (for example, obtained by concatenating w_{new,i} and q_{new,i}), to obtain an output data set (for example, the first output data set in the foregoing embodiment).

Further, as shown in FIG. 6, the worker of the type 4 may feed back an update value Δ*ᵢ* and the output data set to the central node.

After receiving data uploaded by a plurality of workers, the central node may perform two types of fusion which are specifically as follows:

### Data fusion:

The central node may fuse output data sets fed back by the plurality of workers (for example, the worker of the type 3 and/or the worker of the type 4). For example, the central node may perform weighted averaging on the output data sets fed back by the plurality of workers, to obtain an output result. The output result may be used as a common data set that is to be delivered by the central node to the plurality of workers next time.

In federated learning, workers of different types may not share a model structure. Therefore, in embodiments of this application, an effect of restricting working manners of models on different workers to being similar may be achieved by restricting results for the models on different workers on a same common data set to being similar. For example, the central node may request different workers to calculate output data sets for one common data set, upload calculated output data sets to the central node, and then fuse the output data sets obtained by the different workers through the calculation, to obtain an output result, which is considered as an output result upon which the plurality of workers agree. The output result is subsequently used for a next update for each worker.

### Model fusion:

The central node may fuse update values that are for a globally shared model weight and that are fed back by the plurality of workers (for example, the worker of the type 1, the worker of the type 2, and/or the worker of the type 4).

For example, the central node may perform weighted averaging on the update values that are for the globally shared model weight and that are fed back by the plurality of workers, to obtain a new globally shared model weight. Alternatively, the central node may fuse output data sets fed back by the plurality of workers, to obtain a new common data set, and update, based on the new common data set, the update values that are for the globally shared model weight and that are fed back by the plurality of workers, to obtain a new globally shared model weight. The updating, based on the new common data set, the update values that are for the globally shared model weight and that are fed back by the plurality of workers may include: updating, based on the new common data set, the update values that are for the globally shared model weight and that are fed back by the plurality of workers to obtain a plurality of updated weight values, and then performing weighted averaging on the plurality of updated weight values to obtain the new globally shared model weight; or performing weighted averaging on the update values that are for the globally shared model weight and that are fed back by the plurality of workers to obtain a weighted average weight value, and then updating, based on the new common data set, the weighted average weight value to obtain the new globally shared model weight.

With reference to FIG. 7, the following describes an example of model training processes of the worker of the type 1 and the worker of the type 2.

FIG. 7 is a schematic flowchart of a model training method according to another embodiment of this application. The method 700 shown in FIG. 7 may include steps S710 to S760, which are specifically as follows:
S710: A worker A reports a required data type to a central node.

The worker A may include the worker of the type 1 and/or the worker of the type 2.

The worker A may report, to the central node, that the worker A needs to use a shared model weight.

S720: The central node sends a data configuration to the worker A.

The data configuration may include indication information that indicates a time-frequency resource position for sending data (the shared model weight) to the worker A by the central node.

For example, the central node may determine, based on the required data type reported by the worker A, to deliver the shared model weight to the worker A. Further, the central node may send the data configuration to the worker A, to indicate a time-frequency resource position for receiving a required shared model weight by the worker A.

S730: The central node sends a feedback configuration to the worker A.

The feedback configuration may include indication information that indicates a type of data that the central node expects the worker A to feed back. For example, the feedback configuration may include indication information that indicates the worker A to feed back a weight update value.

The feedback configuration may further include indication information that indicates a time-frequency resource position for feeding back the data by the worker A. For example, the feedback configuration may include indication information that indicates a time-frequency resource position for feeding back the weight update value by the worker A.

S740: The central node sends the shared model weight to the worker A.

The central node may send the shared model weight to the worker A at the time-frequency resource position indicated by the data configuration.

S750: The worker A updates a local model based on the shared model weight.

The worker A may use the shared model weight as an initial value of the local model, and update the local model to obtain a weight update value.

Alternatively, the worker A may concatenate the shared model weight and a private model, use, as an initial value of the local model, a model obtained through the concatenation, and update the local model to obtain a weight update value.

S760: The worker A feeds back the weight update value to the central node.

The worker A may send the shared model weight to the central node at the time-frequency resource position indicated by the feedback configuration.

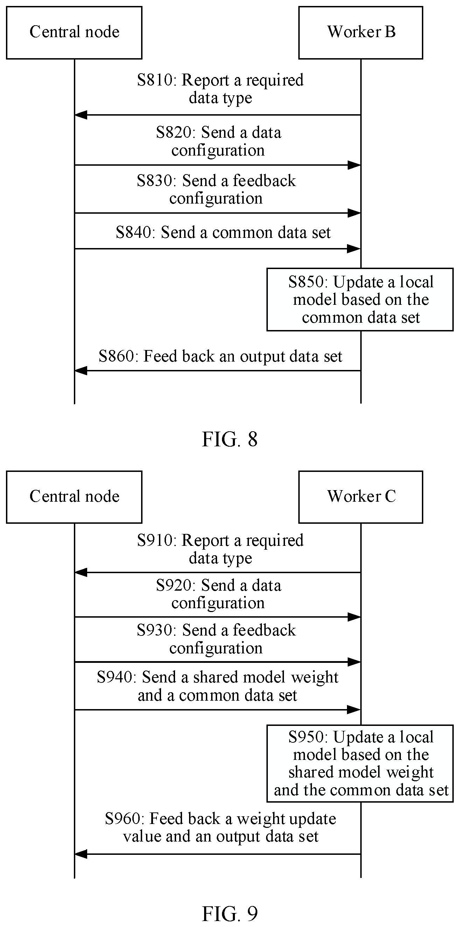

With reference to FIG. 8, the following describes an example of a model training process of the worker of the type 3.

FIG. 8 is a schematic flowchart of a model training method according to still another embodiment of this application. The method 800 shown in FIG. 8 may include steps S810 to S860, which are specifically as follows:
S810: A worker B reports a required data type to a central node.

The worker B may include the worker of the type 3.

The worker B may report, to the central node, that the worker B needs to use a common data set.

S820: The central node sends a data configuration to the worker B.

The data configuration may include indication information that indicates a time-frequency resource position for sending data (the common data set) to the worker B by the central node.

For example, the central node may determine, based on the required data type reported by the worker B, to deliver the common data set to the worker B. Further, the central node may send the data configuration to the worker B, to indicate a time-frequency resource position for receiving a required common data set by the worker B.

The data configuration may further include indication information that indicates a type of an explanation label in the common data set.

The data configuration may further include indication information that indicates the worker B to use specific data in the common data set to determine an output data set.

S830: The central node sends a feedback configuration to the worker B.

The feedback configuration may include indication information that indicates a type of data that the worker B is to feed back (as expected by the central node). For example, the feedback configuration may include indication information that indicates the worker B to feed back the output data set.

The feedback configuration may further include indication information that indicates a type of an explanation label in the output data set.

The feedback configuration may further include indication information that indicates a time-frequency resource position for feeding back the data by the worker B. For example, the feedback configuration may include indication information that indicates a time-frequency resource position for feeding back the output data set by the worker B.

S840: The central node sends the common data set to the worker B.

The central node may send the common data set to the worker B at the time-frequency resource position indicated by the data configuration.

S850: The worker B updates a local model based on the common data set.

The worker B may update the local model based on the common data set and a private data set, and input the common data set into an updated local model, to obtain the output data set.

S860: The worker B feeds back an output data set to the central node.

The worker B may send the output data set to the central node at the time-frequency resource position indicated by the feedback configuration.

With reference to FIG. 9, the following describes an example of a model training process of the worker of the type 4.

FIG. 9 is a schematic flowchart of a model training method according to still another embodiment of this application. The method 900 shown in FIG. 9 may include steps S910 to S960, which are specifically as follows:

S910: A worker C reports a required data type to a central node.

The worker C may include the worker of the type 4.

The worker C may report, to the central node, that the worker C needs to use a shared model weight and a common data set.

S920: The central node sends a data configuration to the worker C.

The data configuration may include indication information that indicates a time-frequency resource position for sending the shared model weight to the worker C by the central node.

The data configuration may further include indication information that indicates a time-frequency resource position for sending the common data set to the worker C by the central node.

For example, the central node may determine, based on the required data type reported by the worker C, to deliver the shared model weight and the common data set to the worker C. Further, the central node may send the data configuration to the worker C, to indicate time-frequency resource positions for receiving the required shared model weight and the required common data set by the worker C.

The data configuration may further include indication information that indicates a type of an explanation label in the common data set.

The data configuration may further include indication information that indicates the worker C to use specific data in the common data set to determine an output data set.

S930: The central node sends a feedback configuration to the worker C.

The feedback configuration may further include indication information that indicates a type of data that the worker C is to feed back (as expected by the central node). For example, the feedback configuration may include indication information that indicates the worker C to feed back a weight update value and the output data set.

The feedback configuration may further include indication information that indicates a type of an explanation label in the output data set.

The feedback configuration may further include indication information that indicates a time-frequency resource position for feeding back data by the worker C. For example, the feedback configuration may include indication information that indicates a time-frequency resource position for feeding back the weight update value by the worker C, and the feedback configuration may include indication information that indicates a time-frequency resource position for feeding back the output data set by the worker C.

S940: The central node sends the shared model weight and the common data set to the worker C.

The central node may send the shared model weight and the common data set to the worker C at the time-frequency resource positions indicated by the data configuration.

S950: The worker C updates a local model based on the shared model weight and the common data set.

The worker C may use the shared model weight as an initial value of the local model, update the local model based on the common data set and a private data set to obtain the weight update value, and input the common data set into an updated local model, to obtain an output data set.

Alternatively, the worker C may concatenate the shared model weight and a private model, use, as an initial value of the local model, a model obtained through the concatenation, update the local model based on the common data set to obtain the weight update value, and input the common data set into the updated local model to obtain the output data set.

S960: The worker C feeds back the weight update value and the output data set to the central node.

The worker C may send the weight update value and the output data set to the central node at the time-frequency resource positions indicated by the feedback configuration.

It should be understood that, sequence numbers of the steps in the foregoing embodiments do not mean an execution sequence. The execution sequence of the processes should be determined based on functions and internal logic of the processes, and should not constitute any limitation on implementation processes of embodiments of this application.

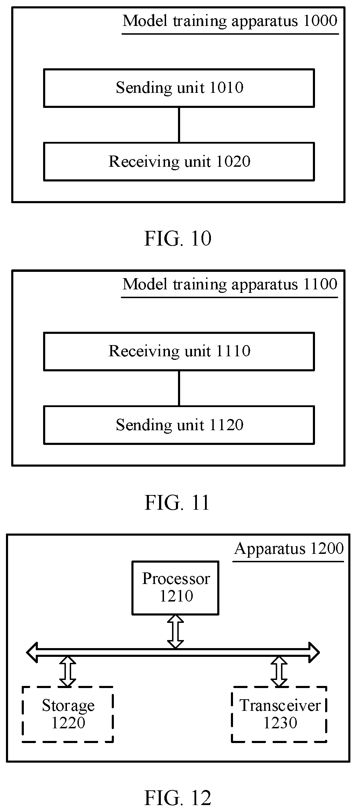

The foregoing describes in detail the method embodiments of this application with reference to FIG. 1 to FIG. 9. The following describes in detail apparatus embodiments of this application with reference to FIG. 10 to FIG. 12. It should be understood that the descriptions of the method embodiments correspond to descriptions of the apparatus embodiments. Therefore, for a part that is not described in detail, refer to the foregoing method embodiments.

FIG. 10 is a diagram of a structure of a model training apparatus according to an embodiment of this application. As shown in FIG. 10, the apparatus 1000 includes a sending unit 1010, which is specifically as follows:

The sending unit 1010 is configured to send, to at least one worker, a first common data set, or the first common data set and a first shared model weight, where the at least one worker includes a first worker; the first shared model weight is used to determine a weight of a local model on the first worker the first common data set is used to train the local model on the first worker, and/or the first common data set is used to determine a first data set; and the first data set is an output data set obtained by processing the first common data set by the local model on the first worker.

Optionally, after the first common data set, or the first common data set and the first shared model weight are sent to the at least one worker, the sending unit 1010 is further configured to send, to the at least one worker, a second common data set, or the second common data set and a second shared model weight, where the second shared model weight is used to determine a weight of the local model on the first worker; the second common data set is used to train the local model on the first worker, and/or the second common data set is used to determine a second data set; and the second data set is an output data set obtained by processing the second common data set by the local model on the first worker.

Optionally, the second common data set is determined based on a first output data set fed back by the at least one worker, the second shared model weight is determined based on a first weight update value and/or the first output data set that are/is fed back by the at least one worker, the first output data set is an output data set obtained by processing the first common data set by the first worker by using the local model, and the first weight update value is an update value for the first shared model weight in a process in which the first worker trains the local model.

Optionally, after the first common data set, or the first common data set and the first shared model weight are sent to the at least one worker, the apparatus 1000 further includes a receiving unit 1020, configured to receive the first output data set from the first worker, where the first output data set is the output data set obtained by processing the first common data set by the first worker by using the local model.

Optionally, before the first output data set is received from the first worker, the sending unit 1010 is further configured to send first information to the first worker, where the first information indicates a first time-frequency resource position for feeding back the first output data set to a central node.

Optionally, when the first output data set includes an explanation label, the sending unit 1010 is further configured to send, to the first worker, indication information that indicates a type of the explanation label in the first output data set, where the explanation label in the first output data set is used to explain processing performed on output data in the first output data set by the local model on the worker.

Optionally, the first output data set includes the output data, a label corresponding to the output data, and/or the explanation label corresponding to the output data, and the explanation label is used to explain the processing performed on the output data by the local model on the worker.

Optionally, after the first common data set, or the first common data set and the first shared model weight are sent to the at least one worker, the apparatus 1000 further includes the receiving unit 1020, configured to receive the first weight update value from the first worker, where the first weight update value is the update value for the first shared model weight in the process in which the first worker trains the local model.

Optionally, before the first weight update value is received from the first worker, the sending unit 1010 is further configured to send second information to the first worker, where the second information indicates a second time-frequency resource position for feeding back the first weight update value to the central node.

Optionally, the sending unit 1010 is further configured to send third information to the first worker, where the third information indicates that the first worker needs to feed back the first output data set and/or the first weight update value.

Optionally, before the first common data set, or the first common data set and the first shared model weight are sent to the at least one worker, the apparatus 1000 further includes the receiving unit 1020, configured to receive fourth information from the first worker, where the fourth information indicates that the first worker needs to use the first common data set and/or the first shared model weight.

Optionally, before the first common data set, or the first common data set and the first shared model weight are sent to the at least one worker, the sending unit 1010 is further configured to send fifth information to the first worker, where the fifth information indicates a third time-frequency resource position for sending the first common data set by the central node.

Optionally, before the first common data set, or the first common data set and the first shared model weight are sent to the at least one worker, the sending unit 1010 is further configured to send sixth information to the first worker, where the sixth information indicates a fourth time-frequency resource position for sending the first shared model weight by the central node.

Optionally, the sending unit 1010 is further configured to send, to the first worker, indication information that indicates the first worker to use specific common data in the first common data set to determine the first data set.

Optionally, when the first common data set includes the explanation label, the sending unit 1010 is further configured to send, to the first worker, indication information that indicates a type of the explanation label in the first common data set, where the explanation label in the first common data set is used to explain processing performed on common data by the local model on the worker.

Optionally, the first common data set includes the common data, a label corresponding to the common data, and/or the explanation label corresponding to the common data, and the explanation label is used to explain the processing performed on the common data by the local model on the worker.

Optionally, the sending unit 1010 is further configured to send the first shared model weight to a second worker, where the first shared model weight is further used to determine a weight of a local model on the second worker.

Optionally, the sending unit 1010 is further configured to send seventh information to the second worker, where the seventh information indicates a second time-frequency resource position for sending the first shared model weight by the central node.

Optionally, after the first shared model weight is sent to the second worker, the sending unit 1010 is further configured to send the second shared model weight to the second worker, where the second shared model weight is used to determine a weight of the local model on the second worker, the second shared model weight is determined based on the first weight update value and/or the first output data set that are/is fed back by the at least one worker, and a second weight update value fed back by at least one second worker, the first weight update value is the update value for the first shared model weight in the process in which the first worker trains the local model, the first output data set is the output data set obtained by processing the first common data set by the first worker by using the local model, and the second weight update value is an update value for the first shared model weight in a process in which the second worker trains the local model.

After the first shared model weight is sent to the second worker, the apparatus 1000 further includes the receiving unit 1020, configured to receive the second weight update value from the second worker, where the second weight update value is the update value for the first shared model weight in the process in which the second worker trains the local model.

Optionally, the sending unit 1010 is further configured to send eighth information to the second worker, where the eighth information indicates a fifth time-frequency resource position for feeding back the second weight update value to the central node.

Optionally, the sending unit 1010 is further configured to send ninth information to the second worker, where the ninth information indicates that the second worker needs to feed back the second weight update value.

Optionally, before the first shared model weight is sent to the second worker, the apparatus 1000 further includes the receiving unit 1020, configured to receive tenth information from the second worker, where the tenth information indicates that the second worker needs to use the first shared model weight.

FIG. 11 is a diagram of a structure of a model training apparatus according to an embodiment of this application. As shown in FIG. 11, the apparatus 1100 includes a receiving unit 1100, which is specifically as follows:

The receiving unit 1110 is configured to receive, from a central node, a first common data set, or the first common data set and a first shared model weight, where the first shared model weight is used to determine a weight of a local model on a first worker; the first common data set is used to train the local model on the first worker, and/or the first common data set is used to determine a first data set; and the first data set is an output data set obtained by processing the first common data set by the local model on the first worker.

Optionally, after the first common data set, or the first common data set and the first shared model weight are received from the central node, the receiving unit 1110 is further configured to receive, from the central node, a second common data set, or the second common data set and a second shared model weight, where the second shared model weight is used to determine a weight of the local model on the first worker; the second common data set is used to train the local model on the first worker, and/or the second common data set is used to determine a second data set; and the second data set is an output data set obtained by processing the second common data set by the local model on the first worker.

Optionally, the second common data set is determined based on a first output data set fed back by at least one worker, the at least one worker includes the first worker, the second shared model weight is determined based on a first weight update value and/or the first output data set that are/is fed back by the at least one worker, the first output data set is an output data set obtained by processing the first common data set by the first worker by using the local model, and the first weight update value is an update value for the first shared model weight in a process in which the first worker trains the local model.

Optionally, the second shared model weight is further determined based on a second weight update value fed back by at least one second worker.

Optionally, after the first common data set, or the first common data set and the first shared model weight are received from the central node, the apparatus 1100 further includes a sending unit 1120, configured to send the first output data set to the central node, where the first output data set is the output data set obtained by processing the first common data set by the first worker by using the local model.

Optionally, before the first output data set is sent to the central node, the receiving unit 1110 is further configured to receive first information from the central node, where the first information indicates a first time-frequency resource position for feeding back the first output data set to the central node.

Optionally, when the first output data set includes an explanation label, the receiving unit 1110 is further configured to receive indication information that is from the central node and that indicates a type of the explanation label in the first output data set, where the explanation label in the first output data set is used to explain processing performed on output data in the first output data set by the local model on the worker.

Optionally, the first output data set includes the output data, a label corresponding to the output data, and/or the explanation label corresponding to the output data, and the explanation label is used to explain the processing performed on the output data by the local model on the worker.

Optionally, after the first common data set, or the first common data set and the first shared model weight are received from the central node, the apparatus 1100 further includes the sending unit 1120, configured to send the first weight update value to the central node, where the first weight update value is the update value for the first shared model weight in the process in which the first worker trains the local model.

Optionally, before the first weight update value is sent to the central node, the receiving unit 1110 is further configured to receive second information from the central node, where the second information indicates a second time-frequency resource position for feeding back the first weight update value to the central node.

Optionally, the receiving unit 1110 is further configured to receive third information from the central node, where the third information indicates that the first worker needs to feed back the first output data set and/or the first weight update value.

Optionally, before the first common data set, or the first common data set and the first shared model weight are received from the central node, the apparatus 1100 further includes the sending unit 1120, configured to send fourth information to the central node, where the fourth information indicates that the first worker needs to use the first common data set and/or the first shared model weight.

Optionally, before the first common data set, or the first common data set and the first shared model weight are received from the central node, the receiving unit 1110 is further configured to receive fifth information from the central node, where the fifth information indicates a third time-frequency resource position for sending the first common data set by the central node.

Optionally, before the first common data set, or the first common data set and the first shared model weight are received from the central node, the receiving unit 1110 is further configured to receive sixth information from the central node, where the sixth information indicates a fourth time-frequency resource position for sending the first shared model weight by the central node.

Optionally, when the first common data set includes the explanation label, the receiving unit 1110 is further configured to receive indication information that is from the central node and that indicates a type of the explanation label in the first common data set, where the explanation label in the first common data set is used to explain processing performed on common data by the local model on the worker.

Optionally, the receiving unit 1110 is further configured to receive indication information that is from the central node and that indicates the first worker to use specific common data in the first common data set to determine the first data set.

Optionally, the first common data set includes the common data, a label corresponding to the common data, and/or the explanation label corresponding to the common data, and the explanation label is used to explain the processing performed on the common data by the local model on the worker.

FIG. 12 is a diagram of a structure of an apparatus according to an embodiment of this application. A dashed line in FIG. 12 indicates that a unit or a module is optional. The apparatus 1200 may be configured to implement the method described in the foregoing method embodiments. The apparatus 1200 may be a chip or a model training apparatus.

The apparatus 1200 may include one or more processors 1210. The processor 1210 may support the apparatus 1200 in implementing the method described in the foregoing method embodiments. The processor 1210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any regular processor or the like.

The apparatus 1200 may further include one or more storages 1220. The storage 1220 stores a program, and the program may be executed by the processor 1210, to cause the processor 1210 to perform the method described in the foregoing method embodiments. The storage 1220 may be independent of the processor 1210, or may be integrated into the processor 1210.

The apparatus 1200 may further include a transceiver 1230. The processor 1210 may communicate with another device or chip via the transceiver 1230. For example, the processor 1210 may perform, with another device or chip, data sending and receiving via the transceiver 1230.

It should be noted that content such as information exchange between the foregoing apparatuses/units and the execution processes thereof is based on a same concept as the method embodiments of this application. For specific functions and technical effects of the content, refer to the method embodiments. Details are not described herein again.

A person skilled in the art may clearly understand that, for the purpose of convenient and brief description, division into the foregoing functional units and modules is merely used as an example for description. In an actual application, the foregoing functions may be allocated, based on a requirement, to different functional units and modules for implementation. In other words, an inner structure of the apparatus is divided into different functional units or modules, to implement all or some of the functions described above. The functional units and modules in embodiments may be integrated into one processing unit, each of the units may exist alone physically, or two or more units may be integrated into one unit. The integrated unit may be implemented in a form of hardware, or may be implemented in a form of a software functional unit. In addition, specific names of the functional units and modules are merely intended for distinguishing between the functional units and modules, but are not intended to limit the protection scope of this application. For specific working processes of the units or modules in the foregoing system, refer to corresponding processes in the method embodiments. Details are not described herein again.

An embodiment of this application further provides a computer-readable storage medium. The computer-readable storage medium stores a computer program. When the computer program is executed by a computer, the computer is caused to implement the steps in the foregoing method embodiments.

An embodiment of this application provides a computer program product. When the computer program product runs on an electronic device (for example, a server or a terminal device), the electronic device is caused to implement the steps in the foregoing method embodiments.

An embodiment of this application provides a chip. The chip includes a processor and a storage. The storage is configured to store a computer program. The processor is configured to invoke and run the computer program stored in the storage, to cause an electronic device (for example, a server or a terminal device) on which the chip is installed to perform the steps in the foregoing method embodiments.

When the integrated unit is implemented in the form of a software functional unit and sold or used as an independent product, the integrated unit may be stored in a computer-readable storage medium. Based on such an understanding, in this application, all or some of the procedures of the method in the foregoing embodiments may be implemented by a computer program instructing related hardware. The computer program may be stored in a computer-readable storage medium. When the computer program is executed by a processor, the steps in the method embodiments may be implemented. The computer program includes computer program code, and the computer program code may be in a form of source code, a form of object code, a form of an executable file, an intermediate form, or the like. The computer-readable storage medium may include at least: any entity or apparatus that can carry the computer program code in an apparatus/electronic device, a recording medium, a computer storage, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disc. In some jurisdictions, the computer-readable storage medium cannot be an electrical carrier signal or a telecommunication signal according to legislation and patent practices.

In the foregoing embodiments, descriptions of each embodiment have respective focuses. For a part that is not described in detail or recorded in an embodiment, refer to related descriptions in other embodiments.

A person of ordinary skill in the art may be aware that, the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the apparatus/electronic device embodiments described above are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be at one position, or may be distributed on a plurality of network units. Some or all of the units may be selected based on actual requirements to achieve the objectives of the solutions of embodiments.

The foregoing embodiments are merely intended to describe the technical solutions of this application, but are not intended to limit the technical solutions of this application. Although this application is described in detail with reference to the foregoing embodiments, a person of ordinary skill in the art should understand that modifications may still be made to the technical solutions described in the foregoing embodiments or equivalent replacements may be made to some technical features thereof. However, these modifications or replacements do not make the essence of the corresponding technical solutions depart from the spirit and scope of the technical solutions in embodiments of this application, and all shall fall within the protection scope of this application.

## Claims

1. A model training method, applied to a central node, and comprising:
sending, to at least one worker, a first common data set, or the first common data set and a first shared model weight, wherein the at least one worker comprises a first worker; the first shared model weight is used to determine a weight of a local model on the first worker; the first common data set is used to train the local model on the first worker, and/or the first common data set is used to determine a first data set; and the first data set is an output data set obtained by processing the first common data set by the local model on the first worker.

2. The method according to claim 1, wherein after the sending, to the at least one worker, the first common data set, or the first common data set and the first shared model weight, the method further comprises:
sending, to the at least one worker, a second common data set, or the second common data set and a second shared model weight, wherein the second shared model weight is used to determine a weight of the local model on the first worker; the second common data set is used to train the local model on the first worker, and/or the second common data set is used to determine a second data set; and the second data set is an output data set obtained by processing the second common data set by the local model on the first worker.

3. The method according to claim 2, wherein the second common data set is determined based on a first output data set fed back by the at least one worker, the second shared model weight is determined based on a first weight update value and/or the first output data set that are/is fed back by the at least one worker, the first output data set is an output data set obtained by processing the first common data set by the first worker by using the local model, and the first weight update value is an update value for the first shared model weight in a process in which the first worker trains the local model.

4. The method according to any one of claims 1 to 3, wherein after the sending, to the at least one worker, the first common data set, or the first common data set and the first shared model weight, the method further comprises:
receiving the first output data set from the first worker, wherein the first output data set is the output data set obtained by processing the first common data set by the first worker by using the local model.

5. The method according to claim 4, wherein before the receiving the first output data set from the first worker, the method further comprises:
sending first information to the first worker, wherein the first information indicates a first time-frequency resource position for feeding back the first output data set to the central node.

6. The method according to claim 4 or 5, wherein when the first output data set comprises an explanation label, the method further comprises:
sending, to the first worker, indication information that indicates a type of the explanation label in the first output data set, wherein the explanation label in the first output data set is used to explain processing performed on output data in the first output data set by the local model on the worker.

7. The method according to any one of claims 4 to 6, wherein the first output data set comprises the output data, a label corresponding to the output data, and/or the explanation label corresponding to the output data, and the explanation label is used to explain the processing performed on the output data by the local model on the worker.

8. The method according to any one of claims 1 to 7, wherein after the sending, to the at least one worker, the first common data set, or the first common data set and the first shared model weight, the method further comprises:
receiving the first weight update value from the first worker, wherein the first weight update value is the update value for the first shared model weight in the process in which the first worker trains the local model.

9. The method according to claim 8, wherein before the receiving the first weight update value from the first worker, the method further comprises:
sending second information to the first worker, wherein the second information indicates a second time-frequency resource position for feeding back the first weight update value to the central node.

10. The method according to any one of claims 4 to 9, wherein the method further comprises:
sending third information to the first worker, wherein the third information indicates that the first worker needs to feed back the first output data set and/or the first weight update value.

11. The method according to any one of claims 1 to 10, wherein before the sending, to the at least one worker, the first common data set, or the first common data set and the first shared model weight, the method further comprises:
receiving fourth information from the first worker, wherein the fourth information indicates that the first worker needs to use the first common data set and/or the first shared model weight.

12. The method according to any one of claims 1 to 11, wherein before the sending, to the at least one worker, the first common data set, or the first common data set and the first shared model weight, the method further comprises:
sending fifth information to the first worker, wherein the fifth information indicates a third time-frequency resource position for sending the first common data set by the central node.

13. The method according to any one of claims 1 to 12, wherein before the sending, to the at least one worker, the first common data set, or the first common data set and the first shared model weight, the method further comprises:
sending sixth information to the first worker, wherein the sixth information indicates a fourth time-frequency resource position for sending the first shared model weight by the central node.

14. The method according to any one of claims 1 to 13, wherein the method further comprises:
sending, to the first worker, indication information that indicates the first worker to use specific common data in the first common data set to determine the first data set.

15. The method according to any one of claims 1 to 14, wherein when the first common data set comprises the explanation label, the method further comprises:
sending, to the first worker, indication information that indicates a type of the explanation label in the first common data set, wherein the explanation label in the first common data set is used to explain processing performed on the common data by the local model on the worker.

16. The method according to any one of claims 1 to 15, wherein the first common data set comprises the common data, a label corresponding to the common data, and/or the explanation label corresponding to the common data, and the explanation label is used to explain the processing performed on the common data by the local model on the worker.

17. The method according to any one of claims 1 to 16, wherein the method further comprises:
sending the first shared model weight to a second worker, wherein the first shared model weight is further used to determine a weight of a local model on the second worker.

18. The method according to claim 17, wherein the method further comprises:
sending seventh information to the second worker, wherein the seventh information indicates a second time-frequency resource position for sending the first shared model weight by the central node.

19. The method according to claim 17 or 18, wherein after the sending the first shared model weight to the second worker, the method further comprises:
sending the second shared model weight to the second worker, wherein the second shared model weight is used to determine a weight of the local model on the second worker, the second shared model weight is determined based on the first weight update value and/or the first output data set that are/is fed back by the at least one worker, and a second weight update value fed back by at least one second worker, the first weight update value is the update value for the first shared model weight in the process in which the first worker trains the local model, the first output data set is the output data set obtained by processing the first common data set by the first worker by using the local model, and the second weight update value is an update value for the first shared model weight in a process in which the second worker trains the local model.

20. The method according to any one of claims 17 to 19, wherein after the sending the first shared model weight to the second worker, the method further comprises:
receiving the second weight update value from the second worker, wherein the second weight update value is the update value for the first shared model weight in the process in which the second worker trains the local model.

21. The method according to claim 20, wherein the method further comprises:
sending eighth information to the second worker, wherein the eighth information indicates a fifth time-frequency resource position for feeding back the second weight update value to the central node.

22. The method according to claim 20 or 21, wherein the method further comprises:
sending ninth information to the second worker, wherein the ninth information indicates that the second worker needs to feed back the second weight update value.

23. The method according to any one of claims 17 to 22, wherein before the sending the first shared model weight to the second worker, the method further comprises:
receiving tenth information from the second worker, wherein the tenth information indicates that the second worker needs to use the first shared model weight.

24. A model training method, applied to a first worker, and comprising:
receiving, from a central node, a first common data set, or the first common data set and a first shared model weight, wherein the first shared model weight is used to determine a weight of a local model on the first worker; the first common data set is used to train the local model on the first worker, and/or the first common data set is used to determine a first data set; and the first data set is an output data set obtained by processing the first common data set by the local model on the first worker.

25. The method according to claim 24, wherein after the receiving, from the central node, the first common data set, or the first common data set and the first shared model weight, the method further comprises:
receiving, from the central node, a second common data set, or the second common data set and a second shared model weight, wherein the second shared model weight is used to determine a weight of the local model on the first worker; the second common data set is used to train the local model on the first worker, and/or the second common data set is used to determine a second data set; and the second data set is an output data set obtained by processing the second common data set by the local model on the first worker.

26. The method according to claim 25, wherein the second common data set is determined based on a first output data set fed back by at least one worker, the at least one worker comprises the first worker, the second shared model weight is determined based on a first weight update value and/or the first output data set that are/is fed back by the at least one worker, the first output data set is an output data set obtained by processing the first common data set by the first worker by using the local model, and the first weight update value is an update value for the first shared model weight in a process in which the first worker trains the local model.

27. The method according to claim 26, wherein the second shared model weight is further determined based on a second weight update value fed back by at least one second worker.

28. The method according to any one of claims 24 to 27, wherein after the receiving, from the central node, the first common data set, or the first common data set and the first shared model weight, the method further comprises:
sending the first output data set to the central node, wherein the first output data set is the output data set obtained by processing the first common data set by the first worker by using the local model.

29. The method according to claim 28, wherein before the sending the first output data set to the central node, the method further comprises:
receiving first information from the central node, wherein the first information indicates a first time-frequency resource position for feeding back the first output data set to the central node.

30. The method according to claim 28 or 29, wherein when the first output data set comprises the explanation label, the method further comprises:
receiving indication information that is from the central node and that indicates a type of the explanation label in the first output data set, wherein the explanation label in the first output data set is used to explain processing performed on output data in the first output data set by the local model on the worker.

31. The method according to any one of claims 28 to 30, wherein the first output data set comprises the output data, a label corresponding to the output data, and/or the explanation label corresponding to the output data, and the explanation label is used to explain the processing performed on the output data by the local model on the worker.

32. The method according to any one of claims 24 to 31, wherein after the receiving, from the central node, the first common data set, or the first common data set and the first shared model weight, the method further comprises:
sending the first weight update value to the central node, wherein the first weight update value is the update value for the first shared model weight in the process in which the first worker trains the local model.

33. The method according to claim 32, wherein before the sending the first weight update value to the central node, the method further comprises:
receiving second information from the central node, wherein the second information indicates a second time-frequency resource position for feeding back the first weight update value to the central node.

34. The method according to any one of claims 28 to 33, wherein the method further comprises:
receiving third information from the central node, wherein the third information indicates that the first worker needs to feed back the first output data set and/or the first weight update value.

35. The method according to any one of claims 24 to 34, wherein before the receiving, from the central node, the first common data set, or the first common data set and the first shared model weight, the method further comprises:
sending fourth information to the central node, wherein the fourth information indicates that the first worker needs to use the first common data set and/or the first shared model weight.

36. The method according to any one of claims 24 to 35, wherein before the receiving, from the central node, the first common data set, or the first common data set and the first shared model weight, the method further comprises:
receiving fifth information from the central node, wherein the fifth information indicates a third time-frequency resource position for sending the first common data set by the central node.

37. The method according to any one of claims 24 to 36, wherein before the receiving, from the central node, the first common data set, or the first common data set and the first shared model weight, the method further comprises:
receiving sixth information from the central node, wherein the sixth information indicates a fourth time-frequency resource position for sending the first shared model weight by the central node.

38. The method according to any one of claims 24 to 37, wherein when the first common data set comprises the explanation label, the method further comprises:
receiving indication information that is from the central node and that indicates a type of the explanation label in the first common data set, wherein the explanation label in the first common data set is used to explain processing performed on the common data by the local model on the worker.

39. The method according to any one of claims 24 to 38, wherein the method further comprises:
receiving indication information that is from the central node and that indicates the first worker to use specific common data in the first common data set to determine the first data set.

40. The method according to any one of claims 24 to 39, wherein the first common data set comprises the common data, a label corresponding to the common data, and/or the explanation label corresponding to the common data, and the explanation label is used to explain the processing performed on the common data by the local model on the worker.

41. A model training apparatus, used in a central node, and comprising:
a sending unit, configured to send, to at least one worker, a first common data set, or the first common data set and a first shared model weight, wherein the at least one worker comprises a first worker; the first shared model weight is used to determine a weight of a local model on the first worker; the first common data set is used to train the local model on the first worker, and/or the first common data set is used to determine a first data set; and the first data set is an output data set obtained by processing the first common data set by the local model on the first worker.

42. A model training apparatus, used in a first worker, and comprising:
a receiving unit, configured to receive, from a central node, a first common data set, or the first common data set and a first shared model weight, wherein the first shared model weight is used to determine a weight of a local model on the first worker; the first common data set is used to train the local model on the first worker, and/or the first common data set is used to determine a first data set; and the first data set is an output data set obtained by processing the first common data set by the local model on the first worker.

43. A model training apparatus, comprising a processor and a storage, wherein the processor is coupled to the storage, the storage is configured to store a computer program, and when the computer program is executed by the processor, the apparatus is caused to perform the method according to any one of claims 1 to 23.

44. A model training apparatus, comprising a processor and a storage, wherein the processor is coupled to the storage, the storage is configured to store a computer program, and when the computer program is executed by the processor, the apparatus is caused to perform the method according to any one of claims 24 to 40.

45. A computer-readable storage medium, wherein the computer-readable storage medium stores a computer program, and when the computer program is run on a computer, the computer is caused to perform the method according to any one of claims 1 to 40.

46. A computer program product, comprising a computer program, wherein when the computer program is run on a computer, the computer is caused to perform the method according to any one of claims 1 to 40.

47. A chip, comprising a processor and a storage, wherein the storage is configured to store a computer program, and the processor is configured to invoke and run the computer program stored in the storage, to cause an apparatus or a device on which the chip is installed to perform the method according to any one of claims 1 to 40.
